# EUROPEAN PATENT APPLICATION

(11) **EP 1 089 315 A1**
(43) Date of publication of application: **04.04.2001**
(21) Application number: 99119367.3
(22) Date of filing: 29.09.1999
(51) Int. Cl.: H01J 29/87, C09J 7/02

(54) **Thermally disappearing pressure-sensitive adhesive sheet, explosion-proof structure of cathode ray tube and explosion-proof tape thereof**

(71) Applicant: NITTO DENKO CORPORATION, Osaka (JP); SONY CORPORATION, Tokyo 141 (JP)
(72) Inventor: Nakamura, Kouichi, c/o Nitto Denko Corporation, Ibaraki-shi, Osaka (JP); Yamamoto, Hiroshi, c/o Nitto Denko Corporation, Ibaraki-shi, Osaka (JP); Matsuoka, Naoki, c/o Nitto Denko Corporation, Ibaraki-shi, Osaka (JP); Okuno, Toshimitsu, c/o Nitto Denko Corporation, Ibaraki-shi, Osaka (JP); Araki, Kyoichi, c/o Nitto Denko Corporation, Ibaraki-shi, Osaka (JP); Imono, Shozo, c/o Nitto Denko Corporation, Ibaraki-shi, Osaka (JP); Tamaki, kazukuni, Shinagawa-ku, Tokyo (JP); Nagata, Toshio, Shinagawa-ku, Tokyo (JP)
(74) Representative: Grünecker, Kinkeldey, Stockmair & Schwanhäusser Anwaltssozietät

(57) **Abstract**

Provided are a thermally disappearing pressure-sensitive adhesive sheet comprising at least a pressure-sensitive adhesive layer which remains in an amount of 5 wt.% or less when heat-treated at not higher than 700°C for not longer than 30 minutes and thus exhibits disappearing properties; and an explosion-proof structure of a cathode ray tube obtained by surrounding the outer periphery of the panel portion of the cathode ray tube with an explosion-proof tape, which has been obtained by disposing a pressure-sensitive adhesive layer on one side of a supporting base material having at least a layer composed of a propylene polymer having a propylene content of at least 40 wt.% or a styrene polymer having a styrene content of at least 50 wt.%, with the pressure-sensitive adhesive layer being disposed on the side of the panel portion and then shrink fitting a metal band on the cathode ray tube through the tape.

## Description

### FIELD OF THE INVENTION

The present invention relates to a thermally disappearing pressure-sensitive adhesive sheet which is excellent in thermally disappearing properties and is therefore suited for the adhesion of an article formed of a material, such as metal or glass, which is provided for recycling use after melting. The present invention also pertains to an explosion-proof structure of a cathode ray tube which permits easy removal of an explosion-proof tape adhered to the outer periphery of the cathode ray tube and a metal band shrink-fitted on the tape, thereby facilitating effective recycling use of the cathode ray tube.

### BACKGROUND OF THE INVENTION

From the viewpoints of maintenance of global environment and effective utilization of resources, there has been an attempt to recover, from wastes of an article made of metal, glass or another meltable material, for example, a cathode ray tube for television or personal computer, the material under a molten state and provide it for recycling use. In the above-described cathode ray tube, recovery of a glass material Which forms the cathode ray tube, a metal belt for explosion prevention of the cathode ray tube and the like and recycling use of them have been attempted.

A cathode ray tube popularly used as a picture tube for television, a monitor of a personal computer or word processor, or the like has been subjected to explosion preventive treatment with a view toward preventing implosion of the cathode ray tube having a vacuum glass tube inside. The explosion-proof treatment is generally carried out by winding an explosion-proof tape to the outer periphery of the panel portion of the cathode ray tube and then shrink-fitting a metal band thereon. Such an explosion-proof structure makes it possible to relax and reduce the bending moment from the inside toward the front surface of the cathode ray tube, that is, from vacuum toward atmospheric pressure by the bending moment in the opposite direction which acts based on the fastening pressure of the metal band.

It is the common practice to recover the above-described cathode ray tube by cutting a metal band, which is formed of a steel belt or the like and is, for the purpose of preventing implosion of the cathode ray tube formed of a vacuum glass tube, shrink-fitted on the outer periphery of the panel portion of the cathode ray tube through a layer surrounding the explosion-proof tape, promptly removing the metal band together with the explosion-proof tape, disassembling the cathode ray tube into a panel portion and a funnel portion after the removal of the remnants of the explosion-proof tape, crushing them into cullets and then melting these cullets.

As the above-described explosion-proof tape, conventionally known is a tape comprising a supporting base material obtained by stacking a layer composed of polyester or polyethylene on a cloth made of glass or cotton; and a rubber or acrylic pressure-sensitive adhesive layer to be adhered strongly on a cathode ray tube. When the metal band is shrink-fitted on this explosion-proof tape adhered through the pressure-sensitive adhesive layer, the supporting base material of the tape is melted, leading to strong adhesion with the metal band.

Since the above-described explosion-proof tape comprising a supporting base material obtained by stacking a polyester film or the like on a cloth made of glass or the like and a pressure-sensitive adhesive layer disposed thereon surrounds the cathode ray tube with strong adhesion and a metal band is shrink-fitted thereon (JP-B-63-24291, the term "JP-B" as used herein means an "examined published Japanese patent publication"), the metal band adheres fast, through the molten and solidified layer of the explosion-proof tape, to the cathode ray tube which is to be salvaged.

An attempt to recover a glass material from waste cathode ray tubes for recycling use from the viewpoints of maintenance of global environment and effective utilization of resources is however accompanied with the problems that it is difficult to disassemble the cathode ray tube owing to strong adhesion of the metal band to the tube through the molten and solidified layer of the explosion-proof tape and in addition, the polishing or scraping work takes much time and labor, because the molten and solidified substance of the explosion-proof tape is squeezed out from the metal band and adheres fast to the cathode ray tube. Such problems substantially prevent the recycling use of the cathode ray tube.

Since the metal band cannot be removed easily, it takes much time and labor for its removal. Moreover, even after the removal of the metal band, the molten and solidified substance of the explosion-proof tape, which is formed by the squeeze-out upon shrink-fitting of the metal band, strongly adheres to the cathode ray tube, which requires mechanical scraping or polishing work. Such work also takes much time and labor. Owing to these problems, the recycling of the cathode ray tube has not shown substantial progress yet.

If the molten and solidified layer of the explosion-proof tape is not removed sufficiently from the cathode ray tube, the component of the explosion-proof tape is carbonized upon obtaining regenerated glass by disassembling the cathode ray tube into a panel portion and a funnel portion, crashing them into cullets and melting them, and its reducing action deteriorates the quality of the resulting glass material. In particular, lead glass which forms the panel portion of the cathode ray tube is required to have high purity so that mixing of impurities makes it difficult to obtain lead glass for the formation of the panel portion.

In the conventional explosion-proof structure, when one fails in adhesion and the metal band is disposed at an improper position, the molten and solidified substance of the explosion-proof tape remains on the cathode ray tube even after the metal band is cut off. Its removal is difficult as described above and moreover, tends to make scratches on the cathode ray tube. Although the cathode ray tube can be provided for recycling use after removal of the remnant of the explosion-proof tape, scratches made upon removal of the remnant presumably causes implosion owing to stress concentration, which prevents the cathode ray tube from being provided for practical use.

An object of the present invention is to develop a pressure-sensitive adhesive sheet which does not require removal of the pressure-sensitive adhesive layer or supporting base material from an adherend which is to be recovered, thereby permitting the melting treatment of the adherend without removing the pressure-sensitive adhesive layer or the like; is free from deterioration in the quality of the recovered material which occurs due to carbonization of the components of the pressure-sensitive adhesive layer; and permits recovery while keeping the purity of the material as high as that before treatment.

Another object of the present invention is to develop an explosion-proof structure of a cathode ray tube from which an explosion-proof tape adhered to the outer periphery of the panel portion of the cathode ray tube and a metal band shrink-fitted on the tape can be removed easily and safely, whereby the cathode ray tube which has been disassembled or failed in explosion-proof treatment can be provided for recycling use effectively.

### SUMMARY OF THE INVENTION

In one aspect of the present invention, there is thus provided a thermally disappearing pressure-sensitive adhesive sheet comprising at least a pressure-sensitive adhesive layer which remains in an amount not greater than 5 wt.% when heated at not higher than 700°C for not longer than 30 minutes and thus exhibits disappearing properties.

In another aspect of the present invention, there is also provided an explosion-proof structure of a cathode ray tube obtained by winding an explosion-proof tape, which comprises a supporting base material composed at least of a layer of a propylene polymer having a propylene content of at least 40 wt.% or a styrene polymer having a styrene content of at least 50 wt.% and a pressure-sensitive adhesive layer disposed on one side of the supporting base material, to the outer periphery of the panel portion of the cathode ray tube and then shrink-fitting a metal band on the cathode ray tube through the tape.

The thermally disappearing pressure-sensitive adhesive sheet according to the present invention is decomposed into gas by heat treatment at low temperature for short time and thus has good disppearing properties. It does not generate residues such as tar or carbon or if any, generation amount is very small, in other words, small enough not to cause a deterioration in the quality. As a result, components of the pressure-sensitive adhesive sheet can be removed by subjecting the adherend to be recycled to heat treatment or melting treatment with the pressure-sensitive adhesive sheet being adhered thereon, whereby the target material can be recovered and regenerated while maintaining the purity of the material as high as possible. Removal of the pressure-sensitive adhesive sheet by scraping or the like is therefore unnecessary and melting and recovery of the target material can be carried out efficiently.

The thermally disappearing pressure-sensitive adhesive sheet according to the present invention is accompanied with another merit that since the adherend can be treated with the pressure-sensitive adhesive sheet thereon, the adherend can be provided for a recovery step such as salvaging without being disassembled even when there occurs an error in the manufacturing line, for example, assembly. Conventionally, in the explosion-proof treatment of a cathode ray tube, when one fails in adhesion and the metal band is disposed at an improper position, the molten and solidified substance of the explosion-proof tape remains on the cathode ray tube even after the metal band is cut off. Its removal is difficult as described above and moreover, tends to make scratches on the cathode ray tube. Scratches made upon removal of the remnant presumably causes implosion owing to stress concentration, which prevents the cathode ray tube from being provided for practical use.

The pressure-sensitive adhesive sheet according to the present invention, on the other hand, can be treated without removing it from the cathode ray tube so that the scraping work which tends to scratch the cathode ray tube is not necessary and the cathode ray tube can be reused after salvaging. In addition, by expanding the metal belt, which has been disposed at an improper position, under heat as in the shrink-fitting, eliminating it from the cathode ray tube, and then subjecting the metal band and the cathode ray tube to heat treatment thereby removing the pressure-sensitive adhesive sheet; or by heating the cathode ray tube without eliminating the metal band which has been disposed at an improper position to thereby remove the pressure-sensitive adhesive sheet and then separating the metal belt from the cathode ray tube, the cathode ray tube and then metal belt can be recovered, easily salvaged and provided for efficient reuse.

According to the explosion-proof structure of the present invention, even if the supporting base material is molten and adheres to the metal band upon shrink-fitting, the adhesive strength is within an extent permitting the prevention of the metal band from shifting from the proper position due to shear force so that the metal band can be peeled off from the explosion-proof tape easily. The metal band can be easily and efficiently removed by cutting or even manually after expanding under heat as in the shrink-fitting. At the same time, the explosion-proof tape remaining on the cathode ray tube can easily and efficiently be removed even manually by peeling off the supporting base material with the pressure-sensitive adhesive layer thereon.

As a result, a glass material with its purity maintained as high as that before treatment can be recovered by easily removing the metal band and explosion-proof tape, which have been imparted to the cathode ray tube for explosion-proof treatment, by the manual work or the like, disassembling the cathode ray tube into a panel portion and a funnel portion and melting these portions. The resulting glass material can be provided for recycling use efficiently as a glass material having the same quality as that before recovery.

Even when there occurs some error in the manufacturing step, for example, the metal belt is adhered to an improper position upon explosion preventive treatment, the cathode ray tube can be salvaged by removing the metal band and explosion-proof tape from the cathode ray tube easily without making scratches thereon and provided for reuse efficiently without disassembling the cathode ray tube.

### BRIEF DESCRIPTION OF THE DRAWINGS

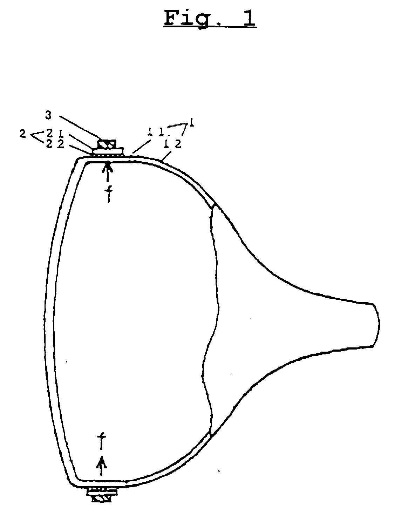

Fig. 1 is a cross-sectional view illustrating Example of the present invention.

### EMBODIMENTS OF THE PRESENT INVENTION

The thermally disappearing pressure-sensitive adhesive sheet according to the present invention comprises at least a pressure-sensitive adhesive layer which remains in an amount not greater than 5 wt.% when heat treated at not higher than 700°C for not longer than 30 minutes and thus exhibits disappearing properties. This means at least that when the pressure-sensitive adhesive layer is heat treated at 700°C for 30 minutes, the ratio of the amount of the layer remained is 5 wt% or less. The thermally disappearing pressure-sensitive adhesive sheet of the present invention can be formed as needed, for example, as a sheet composed only of the pressure-sensitive adhesive layer or a plural-layer sheet having the pressure-sensitive adhesive layer on one side or both sides of a supporting base material.

The pressure-sensitive adhesive layer can be formed using a pressure-sensitive adhesive substance containing, as a base polymer, an appropriate polymer which remains in an amount not greater than 5 wt.% when heat treated at not higher than 700°C for not longer than 30 minutes and thus exhibits disappearing properties. From the viewpoint of the disappearing properties at low temperature for short time, preferred are base polymers which have a thermal decomposition temperature of 150 to 600°C, preferably 200 to 500°C, particularly 250 to 400°C and remain in an amount not greater than 5 wt %, preferably not greater than 3 wt.%, particularly not greater than 2 wt.% when heated at the above-described temperature for not longer than 30 minutes, preferably 3 to 20 minutes, particularly 5 to 15 minutes.

Specific examples of the above-described base polymer exhibiting thermally disappearing properties include polymers having in the molecular chain thereof a -O-O-group, polymethylenemalonic diesters such as dimethyl polymethylenemalonate, diethyl polymethylenemalonate and dipropyl polymethylenemalonate, butylene polymers, nitrocellulose polymers, α-methylstyrene polymers, propylenecarbonate polymers, alkyl (meth)acrylate polymers, and copolymers of a hydrazide-containing monomer and an isocyanate-containing monomer.

The above-described polymer containing in the molecular chain thereof a -O-O- group can be prepared, for example, by carrying out radical polymerization of a monomer such as alkyl (meth)acrylate, (meth)acrylic acid derivative having on its side chain a carboxylic acid derivative group, styrene or styrene derivative while feeding this reaction system with an oxygen gas, thereby introducing one or more than one -O-O- groups in the molecular chain at random.

The polymethylenemalonic diester can be prepared, for example, by hydrogenating ethoxymethylenemalonic diester in a solvent such as methanol in the presence of a catalyst such as platinum dioxide, removing the solvent, eliminating the ethoxy group under heat, purifying the resulting methylenemalonic diester and then polymerizing the purified diester through water contained in the air or the like.

The copolymer of a hydrazide-containing monomer and an isocyanate-containing monomer can be prepared, for example, by polyaddition polymerization of a dihydrazide such as adipic acid dihydrazide, isophthalic acid dihydrazide, sebacic acid dihydrazide, dodecandioic acid dihydrazide, 1,3-bis(hydrazinocarboethyl)-5-isopropylhydantoin, eicosandioic acid dihydrazide or 7,11-octadecadien-1,18-dicarbohydrazide and a diisocyanate such as hexamethylene diisocyanate, tolylene diisocyanate, methylene-bis(4-phenylisocyanate), xylylene diisocyanate or 3-isocyanatemethyl-3,5,5-trimethylcyclohexyl-isocyanate.

The pressure-sensitive adhesive substance for forming the pressure-sensitive adhesive layer can be obtained by adding, to the above-described polymer, a plasticizer such as dibutyl phthalate or dioctyl phthalate, softener such as xylene oil, terpene oil, paraffin or wax as needed and adjusting its shearing modulus at normal temperature to about 10⁵ to 10⁶ dyne/cm². When the shearing modulus at normal temperature is adjusted to at least 10⁸ dyne/cm² and that at 100°C is adjusted to about 10⁵ to 10⁶ dyne/cm², a heat activated type pressure-sensitive adhesive layer, that is, a pressure-sensitive adhesive layer exhibiting adhesion by heating can be obtained.

The preferred weight average molecular weight of the polymer for attaining the above-described shearing modulus is 5,000,000 or less, preferably 100,000 to 4,000,000, particularly 200,000 to 3,000,000. As the base polymer of the pressure-sensitive adhesive layer, one or more than one polymers can be employed. In consideration of thermally disappearing properties, examples of the polymer particularly preferred as a base polymer of the pressure-sensitive adhesive layer include butene polymers such as polyisobutylene and methacrylic acid polymers composed mainly of a methacrylic acid ester such as butyl methacrylate, octyl methacrylate or lauryl methacrylate and having a glass transition point of 30°C or less, preferably - 20°C.

The pressure-sensitive adhesive layer can be formed, for example, by mixing components such as a base polymer, if necessary, in a solvent such as toluene or ethyl acetate, and spreading the mixture on a supporting base material by an appropriate method such as doctor blade method or forming the mixture into a film by means of calendering or extrusion.

Upon formation of the pressure-sensitive adhesive layer, a pyrolysis promoter can be added in order to accelerate its pyrolysis, for example, iron sulfate, sodium nitrite, heavy metal ion, hydroquinone, linoleic acid, ascorbic acid or cysteine to a depolymerizable polymer, while azodicarbonamide represented by the formula: H₂NCON=NCONH₂ to a random decomposable polymer such as a copolymer of a hydrazide-containing monomer and an isocyanate-containing monomer. These pyrolysis promoters can be added generally in an amount of 1 to 10 parts by weight per 100 parts by weight of the polymer.

The thermally disappearing pressure-sensitive adhesive sheet composed singly of a pressure-sensitive adhesive layer can be made separable by disposing, as a separator, a release coating composed of a silicone polymer or the like on a supporting base material in the above-described developing method as well as film forming method by calendering or the like. The thickness of the pressure-sensitive adhesive layer can be adjusted to even at least 1 mm depending on the using purpose, but is generally adjusted to 1 to 500 µm, preferably 5 to 300 µm, particularly, 10 to 150 µm.

When the thermally disappearing pressure-sensitive adhesive sheet is one formed of plural layers in which the pressure-sensitive adhesive layer is attached to the supporting base material, the pressure-sensitive adhesive layer can be disposed on one side or both sides of the supporting base material. As the supporting base material, a material which remains, after heat treatment at 700°C or less for 30 minutes or less, in an amount of 5 wt % or less and thus exhibits disappearing properties or a material which does not exhibit such properties can be used as needed.

In the former case, when the supporting base material exhibits similar thermally disappearing properties to the pressure-sensitive adhesive layer disposed thereon, the whole pressure-sensitive adhesive sheet including the supporting base material disappears by heating. From the viewpoint of the disappearing properties at low temperature for short time, preferred is a supporting base material which has a thermal decomposition temperature of 150 to 600°C, preferably 200 to 500°C, particularly 250 to 400°C, remains, after heating at such temperatures for 30 minutes or less, preferably 3 to 20 minutes, particularly 5 to 15 minutes, in an amount of 5 wt.% or less, preferably 3 wt.% or less, particularly 2 wt.% less and thus exhibits disappearing properties.

The above-described thermally disappearing supporting base material can be obtained by adding, to a polymer exemplified above as the base polymer of the pressure-sensitive adhesive layer, a plasticizer, softener or the like as needed to adjust the shearing modulus at normal temperature to at least 10⁸ dyne/cm². In order to attain the above-described shearing modulus, the polymer preferably has a weight average molecular weight of at least 2,000,000, more preferably at least 5,000,000, most preferably at least 8,000,000. The upper limit thereof is generally 20,000,000. It is possible to add a pyrolysis promoter, as needed, to the supporting base material exhibiting thermally disappearing properties.

When the thermal disappearance of the supporting base material is not intended, on the other hand, materials having necessary properties such as heat resistance and strong tenacity can be used as a supporting base material. Specific examples include films or sheets made of a resin such as polyester, polyimide, (aromatic) polyamide, polysulfone, polyether sulfone or polyamidimide or made of a rubber polymer such as fluorine rubber or silicone rubber; and woven cloths or nonwoven clothes made of fibers carbonized by burning (carbonized fibers or carbon fibers) such as acrylic fibers, glass fibers such as quartz, fused silica fibers, ceramic fibers, aramide fibers or cellulose fibers.

In the case of the pressure-sensitive adhesive sheet using a supporting base material which does not disappear by heating, the supporting base material is peeled off and removed prior to the melting treatment of the adherend. Upon removal of the supporting base material, the pressure-sensitive adhesive layer is considered to be removed together. In this invention, however, the simultaneous removal of the pressure-sensitive adhesive layer with the supporting base material is not intended, because the pressure-sensitive adhesive layer has thermally disappearing properties and remaining of the pressure-sensitive adhesive layer on the adherend does not cause any problem. The pressure-sensitive adhesive layer remaining on the adherend can be thermally removed by subjecting it to the melting treatment together with the adherend. Incidentally, the thickness of the supporting base material can be adjusted even to 5 mm or greater according to the using purpose, but is usually adjusted to 10 µm to 1 mm, preferably 20 to 800 µm, particularly 30 to 500 µm.

The thermally disappearing pressure-sensitive adhesive sheet according to the present invention is preferably employed for the adhesion of an article to be recycled such as an article made of a material which can be reclaimed by melting, for example, glass or metal. In the above-described explosion preventing treatment of a cathode ray tube, shrink-fitting is usually carried out by heating the metal belt to 450 to 550 °C, but by this heating, the pressure-sensitive adhesive sheet does not disappear because the heating time is not so long.

The explosion-proof structure of a cathode ray tube according to the present invention is obtained by surrounding the outer periphery of the panel portion of the cathode ray tube with an explosion-proof tape, which comprises a supporting base material composed at least of a layer of a propylene polymer having a propylene content of at least 40 wt.% or a styrene polymer having a styrene content of at least 50 wt.% and a pressure-sensitive adhesive layer disposed on one side of the supporting base material, with the pressure-sensitive adhesive layer disposed on the side of the panel portion, and then shrink-fitting a metal band on the cathode ray tube through the tape. This structure is illustrated in Fig. 1, in which indicated at numeral 1 is a cathode ray tube formed of a panel portion 11 and a funnel portion 12, indicated at numeral 2 is an explosion-proof tape composed of a supporting base material 21 and a pressure-sensitive adhesive layer 22 and indicated at numeral 3 is a metal band.

In the present invention, employed as the explosion-proof tape is a tape comprising a supporting base material composed at least of a layer of a propylene polymer having a propylene content of at least 40 wt.% or a styrene polymer having a styrene content of at least 50 wt.% and a pressure-sensitive adhesive layer disposed on one side of the supporting base material.

Examples of the propylene polymer forming the supporting base material include a homopolymer of propylene, a random or block copolymer of propylene and ethylene adjusted to have a propylene content of at least 40 wt.%, an ethylene-propylene rubber, a mixture of polypropylene and polyethylene and a mixture of at least two of the above-described polymers.

Examples of the styrene polymer include a homopolymer of styrene, a styrene isoprene copolymer, styrene-butadiene copolymer, styrene isoprene-styrene block copolymer or styrene butadiene styrene copolymer which is adjusted to have a styrene content of at least 50 wt.%, and a mixture of at least one of the above-exemplified copolymer and a styrene homopolymer.

The propylene polymer or styrene polymer having a molecular weight of from 100,000 to 1,000,000 can be preferably used.

If priority is given to easy peeling from the shrink-fit metal belt, a supporting base material having, on the surface thereof, at least a layer of a propylene homopolymer or styrene homopolymer is preferred. If a countermeasure for fixing the shrink-fit position of the metal band is desired, for example, in the case where the shrink-fitting of the metal band must be carried out on a tapered position of a cathode ray tube and shift from the proper position tends to occur due to the slippage of the band, a supporting base material exhibiting a little adhesion with the metal band upon shrink fitting can be used.

When the exhibition of the adhesion is intended, a supporting base material having, at least on the surface thereof, a layer composed of a propylene polymer or styrene polymer containing a component such as ethylene or isoprene showing good adhesion with the metal band, such as the above-described ethylene-containing copolymer, polyethylene mixture, or isoprene- or butadiene-containing copolymer or mixture thereof.

As the propylene polymer which can satisfy both of easy-peeling properties and slippage-preventive adhesion of the metal band, preferred is a polymer having a propylene content of at least 50 wt.%, preferably 55 to 95 wt.%, particularly 65 to 85 wt.%. In the case of a styrene base polymer having such properties, that having a styrene content of at least 60 wt.%, preferably 65 to 95 wt.%, particularly 70 to 85 wt % is preferred.

When a propylene polymer having a propylene content less than 40 wt % or a styrene polymer having a styrene content less than 50 wt.% is employed, the adhesion with the shrink-fit metal band becomes excessive, which prevents easy peeling, for example, manual peeling of the metal band.

On the other hand, the slippage of the metal band can be prevented by the effects of the ruggedness of a rough cloth made of glass, cotton or the like. In such a case, a supporting base material obtained by stacking a film composed of the above-exemplified propylene polymer or styrene polymer on such a cloth is used. In this case, a propylene or styrene homopolymer is also usable.

The thickness of the supporting base material can be determined as needed, depending on the size of the cathode ray tube. The supporting base material can be formed to have a thickness exceeding 1 mm, but it usually has a thickness of 5 to 500 µm, preferably 10 to 300 µm, particularly 20 to 200 µm. The surface of the supporting base material to have a pressure-sensitive adhesive layer disposed thereon can be subjected to surface treatment such as corona treatment or primer treatment as needed with a view to improving the adhesion with the pressure-sensitive adhesive layer.

The pressure-sensitive adhesive layer may be formed of an appropriate pressure-sensitive adhesive such as rubber or acrylic one. Preferred is a pressure-sensitive adhesive layer which does not leave the pressure-sensitive adhesive on the cathode ray tube and can be peeled together with the supporting base material. Such a pressure-sensitive adhesive layer can be formed of an appropriate known pressure-sensitive adhesive free from pressure-sensitive adhesive remaining such as a polyisobutylene pressure-sensitive adhesive or an acrylic pressure-sensitive adhesive containing, as a base polymer, a copolymer of an alkyl acrylate and acrylic acid.

The pressure-sensitive adhesive layer can be disposed to the supporting base material as needed, for example, by spreading a solution of a pressure-sensitive adhesive onto the supporting base material by doctor blade method or the like, followed by drying; or by transferring a pressure-sensitive adhesive layer, which has been formed on a separator in accordance with the above method, to the supporting base material. The thickness of the pressure-sensitive adhesive layer may be determined as needed, but is usually 1 to 500 µm, preferably 3 to 200 µm, particularly 5 to 100 µm.

The explosion-proof structure of the cathode ray tube according to the present invention can be formed in a conventional manner except for the use of the above-exemplified explosion-proof tape, for example, by surrounding the outer periphery of the panel portion of the cathode ray tube with the explosion-proof tape with the pressure-sensitive adhesive layer being disposed on the side of the panel portion and then shrink fitting a metal band made of steel or the like on the panel portion through the tape.

In the present invention, an explosion-proof tape easily peelable from the metal band is employed. The force required for the explosion prevention of a cathode ray tube is a fastening force (f in Fig. 1) of the metal band which permits relaxation or reduction of a bending moment acting on the internally vacuum cathode ray tube through atmospheric pressure so that the fastening force can be generated sufficiently only by the metal band. Even if adhesion between the metal band and the explosion-proof tape is weak, sufficient fastening force can be exhibited by the metal band. As a result, the explosion-proof structure according to the present invention has similar effects to the conventional structure.

### EXAMPLES

### Example 1-1

A toluene solution containing 100 parts (parts by weight, which will hereinafter be applied similarly) of polybutyl methacrylate having a weight average molecular weight of 6,000,000 and 10 parts of dioctyl phthalate was applied to a liner (separator), followed by drying in an oven. On the resulting film having a shearing modulus, at normal temperature, of 3 x 10¹⁰ dyne/cm² and a thickness of 75 µm, a polybutene pressure-sensitive adhesive layer having a shearing modulus, at normal temperature, of 4 x 10⁵ dyne/cm² and a thickness of 25 µm was disposed, whereby a thermally disappearing pressure-sensitive adhesive sheet was obtained. Incidentally, the disposal of the above-described polybutene pressure-sensitive adhesive layer was carried out by the transfer of a film, which had been obtained by applying a solution of polyisobutylene having a weight average molecular weight of 1,100,000 dissolved in toluene on a liner, followed by drying in an oven.

### Example 1-2

In a similar manner to Example 1-1 by using a toluene solution containing 100 parts of diethyl polymethylenemalonate having a weight average molecular weight of 8,000,000 and 20 parts of dibutyl phthalate, a film having a shearing modulus, at normal temperature, of 6 x 10¹⁰ dyne/cm² was obtained. On the resulting film, a polylauryl methacrylate pressure-sensitive adhesive layer having a shearing modulus, at normal temperature, of 2 x 10⁵ dyne/cm² was disposed, whereby a thermally disappearing pressure-sensitive adhesive sheet was obtained. The above-described pressure-sensitive adhesive layer was prepared in a similar manner to Example 1-1 by using a copolymer (weight average molecular weight: 900,000) composed of 98 parts of lauryl methacrylate and 2 parts of acrylic acid.

### Example 1-3

In a similar manner to Example 1-1 by using a toluene solution containing 100 parts of poly(a-methylenestyrene) having a weight average molecular weight of 10,000,000 and 15 parts of dioctyl phthalate, a film having a shearing modulus, at normal temperature, of 2 x 10¹¹ dyne/cm² was obtained. On the resulting film, a polylauryl methacrylate pressure-sensitive adhesive layer having a shearing modulus, at normal temperature, of 8 x 10⁵ dyne/cm² was disposed, whereby a thermally disappearing pressure-sensitive adhesive sheet was obtained. The above-described pressure-sensitive adhesive layer was prepared in a similar manner to Example 1-1 by using a copolymer (weight average molecular weight: 1,200,000) composed of 80 parts of lauryl methacrylate and 20 parts of methyl methacrylate.

### Comparative Example. 1-1

A rubber pressure-sensitive adhesive layer having a thickness of 25 µm and being composed of 100 parts of a natural rubber and 100 parts of a rosin tackifier resin, was disposed on a film having a thickness of 75 µm and being composed of a polyester having a weight average molecular weight of 10,000,000 to thereby obtain a pressure-sensitive adhesive sheet.

### Comparative Example 1-2

A toluene solution containing 100 parts of a copolymer (weight average molecular weight: 1,000,000) prepared from 95 parts of butyl acrylate and 5 parts of acrylic acid, and 20 parts of a rosin tackifier resin was applied to a liner, followed by drying in an oven, whereby a baseless pressure-sensitive adhesive sheet composed of an acrylic pressure-sensitive adhesive layer having a thickness of 50 µm was prepared.

### Evaluation Test

From each of the pressure-sensitive adhesive sheets obtained in Examples 1 and Comparative Examples 1, 1 g was sampled, placed in a Petri dish made of aluminum and then heated at 400°C for 15 minutes. The residue generated by heating was weighed, from which a remaining ratio relative to the initial weight was calculated. It should be noted that only the pressure-sensitive adhesive layer was employed as a sample in Comparative Example 1-2.

The results are shown in the following table.

**Table**

| | Example 1-1 | Example 1-2 | Example 1-3 | Comp. Ex. 1-1 | Comp. Ex. 1-2 |
|---|---|---|---|---|---|
| Remaining ratio (%) | 1.2 | 0.8 | 2.4 | 84 | 60 |

### Example 2-1

A pressure-sensitive adhesive layer having a thickness of 20 µm and being composed of polyisobutylene having a weight average molecular weight of about 1,000,000 was disposed on one side of a film having a thickness of 50 µm and being composed of 100 parts of a propylene homopolymer and 0.5 part of oleic amide as a lubricant to thereby obtain an explosion-proof tape.

Then, the outer periphery of the panel portion of a cathode ray tube was surrounded and adhered with the above-described pressure-sensitive adhesive tape of 50 mm wide through the pressure-sensitive adhesive layer and on the pressure-sensitive adhesive tape, a steel band of 30 mm wide was shrink fitted by induction heating to 500°C, whereby an explosion-proof structure was formed.

### Example 2-2

A toluene solution of an acrylic pressure-sensitive adhesive was applied on one side of a film having a thickness of 50 µm obtained by stretching an extruded film composed of 30 parts of a propylene homopolymer, 40 parts of an ethylene-propylene random copolymer having an ethylene content of 30 wt.% and 30 parts of an ethylene homopolymer, followed by drying, whereby an explosion-proof tape having a pressure-sensitive adhesive layer having a thickness of 20 µm was prepared. In a similar manner to Example 2-1 by using the resulting tape, an explosion-proof structure was formed. Incidentally, the acrylic pressure-sensitive adhesive was obtained by adding 60 parts of dibutyl phthalate and 4 parts of a melamine crosslinking agent to 100 parts of a base polymer obtained by copolymerization of 95 parts of butyl acrylate and 5 parts of acrylic acid.

### Example 2-3

A pressure-sensitive adhesive layer having a thickness of 20 µm and being composed of an acrylic pressure-sensitive adhesive obtained by adding 40 parts of dibutyl phthalate and 2 parts of an isocyanate crosslinking agent to 100 parts of a base polymer obtained by copolymerizing 93 parts of 2-ethylhexyl acrylate and 7 parts of acrylic acid was disposed on one side of a film having a thickness of 50 µm and being composed of a mixture of 70 parts of a styrene homopolymer, 30 parts of a styrene-isoprene-styrene block copolymer having a styrene content of 10 wt.% and 0.5 part of oleic amide as a lubricant to obtain an explosion-proof tape. In a similar manner to Example 2-1 by using the resulting tape, an explosion-proof structure was formed.

### Comparative Example 2-1

A rubber pressure-sensitive adhesive layer having a thickness of 20 µm and being composed of a mixture of 100 parts of a masticated rubber, 80 parts of a natural rosin resin, 10 parts of a phenol resin and 5 parts of a Zinc Resin was disposed on one side of a film having a thickness of 50 µm and being composed of a mixture of 100 parts of low density polyethylene and 0.5 part of oleic amide as a lubricant to obtain an explosion-proof tape. In a similar manner to Example 2-1 by using the resulting tape, an explosion-proof structure was formed.

### Comparative Example 2-2

A pressure-sensitive adhesive layer having a thickness of 20 µm and being composed of an acrylic pressure-sensitive adhesive, which had been obtained by adding 20 parts of a terpene phenol resin and 3 parts of an isocyanate crosslinking agent to 100 parts of a base polymer obtained by copolymerizing 95 parts of butyl acrylate and 5 parts of acrylic acid, was disposed on one side of a stretched film having a thickness of 50 µm and being composed of a mixture of 60 parts of an ethylene homopolymer and 40 parts of an ethylene-propylene block copolymer having an ethylene content of 30 wt.% to thereby obtain an explosion-proof tape. In a similar manner to Example 2-1 by using the resulting tape, an explosion-proof structure was formed.

### Comparative Example 2-3

In a similar manner to Example 2-1 except for the use, as a supporting base material for a pressure-sensitive adhesive layer, of a film having a thickness of 50 µm and being composed of a mixture of 40 parts of a styrene homopolymer, 60 parts of a styrene-isoprene-styrene block copolymer having a styrene content of 10 wt.% and 0.5 part of oleic amide as a lubricant, an explosion-proof tape was obtained. By using the resulting tape, an explosion-proof structure was formed.

### Evaluation Test

After the steel band was expanded by conduction heating and removed from the cathode ray tube obtained by each of Examples 2 and Comparative Examples 2, the manual removability of each of the explosion-proof tape component remaining on the cathode ray tube and that transferred to the steel band was studied.

The results are as follows:
Example 2-1: Together with the steel band, most part of the explosion-proof tape was peeled from the cathode ray tube. Peeling and removal of the explosion-proof tape from the steel band and peeling and removal of the explosion-proof tape remaining on the cathode ray tube were carried out easily by fingers.

Examples 2-2 and 2-3: Together with the steel band, about half of the explosion-proof tape was peeled from the cathode ray tube. Peeling and removal of the explosion-proof tape from the steel band and peeling and removal of the explosion-proof tape remaining on the cathode ray tube were carried out easily by fingers.

Comparative Examples 2-1 and 2-2: The supporting base material and pressure-sensitive adhesive layer of the explosion-proof tape adhered fast to both of the steel band and cathode ray tube and could not be removed by peeling by fingers.

Comparative Example 2-3: The supporting base material of the explosion-proof tape adhered strongly to both of the steel band and cathode ray tube and could not be removed by peeling by fingers.

While the invention has been described in detail and with reference to specific embodiments thereof, it will be apparent to one skilled in the art that various changes and modifications can be made therein without departing from the spirit and scope thereof.

## Claims

1. A thermally disappearing pressure-sensitive adhesive sheet comprising at least a thermally disappearing pressure-sensitive adhesive layer which remains in an amount of not more than 5 wt.% when heat-treated at not higher than 700°C for not longer than 30 minutes.

2. A thermally disappearing pressure-sensitive adhesive sheet according to claim 1, wherein said pressure-sensitive adhesive layer is composed mainly of polybutene or polylauryl methacrylate.

3. A thermally disappearing pressure-sensitive adhesive sheet according to claim 1, wherein said pressure-sensitive adhesive layer is disposed on one side or both sides of a thermally disappearing supporting base material which remains in an amount of not more than 5 wt.% when heat-treated at not higher than 700°C for not longer than 30 minutes.

4. A thermally disappearing pressure-sensitive adhesive sheet according to claim 1, which remains in an amount of not more than 5 wt.% when heat-treated at not higher than 400°C for not longer than 15 minutes.

5. A thermally disappearing pressure-sensitive adhesive sheet according to claim 1 used for the adhesion of an article made of a material to be reclaimed by melting.

6. An explosion-proof structure of a cathode ray tube obtained by winding an explosion-proof tape, which comprises a supporting base material composed at least of a layer of a propylene polymer having a propylene content of at least 40 wt.% or a styrene polymer having a styrene content of at least 50 wt.% and a pressure-sensitive adhesive layer disposed on one side of said supporting base material, to the outer periphery of the panel portion of the cathode ray tube through the pressure-sensitive adhesive layer therebetween and then shrink-fitting a metal band on the cathode ray tube through the tape.

7. An explosion-proof tape for having a metal band shrink-fitted thereon after wound to the outer periphery of the panel portion of a cathode ray tube, which tape comprises a pressure-sensitive adhesive layer on one side of a supporting base material composed at least of a layer of a propylene polymer having a propylene content of at least 40 wt.% or a styrene polymer having a styrene content of at least 50 wt.%.

8. An explosion-proof tape according to claim 7, wherein the pressure-sensitive adhesive layer is composed of polyisobutylene.
